# EUROPÄISCHE PATENTSCHRIFT

(11) **EP 3 106 010 B1**
(45) Veröffentlichungstag und Bekanntmachung des Hinweises auf die Patenterteilung: **17.10.2018**
(21) Anmeldenummer: 16401031.6
(22) Anmeldetag: 26.05.2016
(51) Int. Cl.: A01B 69/02

(54) **SÄVORRICHTUNG**
SEEDING DEVICE
DISPOSITIF DE SEMIS

(30) Priorität: 16.06.2015 DE 102015109583
(43) Veröffentlichungstag der Anmeldung: 21.12.2016
(73) Patentinhaber: Amazonen-Werke H. Dreyer GmbH & Co. KG, 49205 Hasbergen (DE)
(72) Erfinder: Mertens, Daniel, 26121 Oldenburg (DE)

(56) Entgegenhaltungen:
- US-A- 3 250 333
- US-A- 4 530 405
- US-B1- 6 257 343

## Beschreibung

Die Erfindung betrifft eine Sävorrichtung gemäß dem Oberbegriff des Patentanspruches 1.

Bei den hier betroffenen Sävorrichtungen handelt es sich um landwirtschaftliche Maschinen, wie Großflächen-Sämaschinen oder Einzelkorn-Sämaschinen, für die Direktsaat, Mulchsaat oder konventionelle Saat. Derartige Sävorrichtungen werden mit einem als Fahrgestell ausgebildeten Rahmen ausgeführt, so dass sie beispielsweise als Anhänger oder Dreipunktanbaugerät eines landwirtschaftlichen Nutzfahrzeuges verwendet werden können, wobei selbst fahrende Sävorrichtungen mit einem dementsprechenden Antriebsaggregat an dieser Stelle explizit nicht ausgeschlossen sind.
Bei Sävorrichtungen mit großer Arbeitsbreite kommen Spuranreißer zum Markieren einer Spur zum Einsatz. Da derartige Spuranreißer eine erhebliche Breite aufweisen, ist es für den Transport der Sävorrichtung aus Sicherheitsgründen erforderlich und auch vorgeschrieben, den Spuranreißer einklappbar auszuführen, wobei während des Transports im Straßenverkehr eine eingeklappte Höhe von 4 m nicht überschritten werden darf. Diese Stellung wird auch als Transportstellung des Spuranreißers bezeichnet.
Bei der Bearbeitung des Feldes weist der Spuranreißer dem gegenüber eine Arbeitsstellung auf, bei der die am Ende des Spuranreißers vorhandene Spuranreißerscheibe in dem Untergrund eine sichtbare Spur erzeugt. Mit anderen Worten ist der Spuranreißer bei der Bearbeitung des Untergrundes vollständig ausgeklappt.
Während eines Wendevorganges der Sävorrichtung wird der Spuranreißer kurzzeitig angehoben und damit in eine Wendestellung gebracht, in der er den Untergrund nicht mehr berührt, aber nicht so weit eingeklappt ist, dass ein Transport der gesamten Sävorrichtung im Straßenverkehr möglich wird.

Aus der EP 1 776 853 A1 ist bereits eine Sävorrichtung bekannt, die einen als Fahrgestell ausgebildeten Rahmen aufweist, der einen um ein Drehgelenk zwischen einer Arbeitsstellung, einer Wendestellung und einer Transportstellung schwenkbaren Spuranreißer aufweist. Ein Hydraulikzylinder wird dabei dazu verwendet, den Spuranreißer mittelbar über eine aus zwei gelenkig miteinander verbundenen Hebeln bestehende Hebelmechanik zu bewegen, die mit dem Spuranreißer gekoppelt ist. In diesem Fall wird der über eine Hydraulik steuerbare Hydraulikzylinder für die Anwahl sämtlicher Stellungen des Spuranreißers genutzt. Nachteilig ist bei dieser Lösung jedoch, dass durch die verwendete Hebelmechanik eine Vielzahl einzelner, gelenkig miteinander verbundener Bauteile erforderlich wird, so dass dadurch einerseits die Montage erschwert ist und sich andererseits die Störanfälligkeit einer derartigen Vorrichtung insgesamt erhöht.

Darüber hinaus geht aus der EP 1 776 852 A1 eine Sävorrichtung hervor, bei der zwei separate Hydraulikzylinder zur Ansteuerung der Arbeitsstellung, der Wendestellung und der Transportstellung des Spuranreißers verwendet werden. Die Verbindung zwischen einem der Hydraulikzylinder und dem Spuranreißer besteht aus einem Zwischenhebel, der ein zusätzliches Bauteil darstellt. Diese Lösung stellt eine kostenintensivere Ausführung dar, als die im Zusammenhang mit der EP 1 776 853 A1 beschriebene Sävorrichtung.

Die in der DE 196 34 934 C2 offenbarte Sävorrichtung erfordert ebenfalls zwei voneinander unabhängig agierende Hydraulikzylinder sowie einen zweiarmigen Hebel, um die Ansteuerung der Arbeitsstellung, der Wendestellung und der Transportstellung des Spuranreißers zu ermöglichen. Auch hierbei stellen sich der erhöhte Montageaufwand und die Vielzahl der zum Einsatz kommenden Einzelteile als nachteilig heraus, weil eine derartige Gestaltung relativ aufwändig und teuer ist.

Eine weitere Ausführungsform eines Spuranreißers ist in der US 6 257 343 B1 offenbart. Ein zum Verschwenken des Spuranreißers vorgesehener Hydraulikzylinder ist gelenkig mit einer schwenkbar an dem Rahmen angelenkten Wippe verbunden.

Der Erfindung liegt die Aufgabe zugrunde, eine Sävorrichtung dahingehend zu verbessern, dass sie einfacher und damit kostengünstiger aufgebaut ist, als bekannte Lösungen.

Die Erfindung löst diese Aufgabenstellung mit den technischen Merkmalen des Patentanspruches 1.
Weitere, vorteilhafte Ausgestaltungen der Erfindung sind in den sich anschließenden Unteransprüchen angegeben.

Eine Sävorrichtung mit einem vorzugsweise als Fahrgestell ausgebildeten Rahmen, der einen um ein Drehgelenk zwischen einer Arbeitsstellung, einer Wendestellung und einer Transportstellung schwenkbaren Spuranreißer aufweist, wobei ein einziger, gelenkig mit dem Spuranreißer gekoppelter Hydraulikzylinder mittels einer vorhandenen Hydraulik zur Anwahl und Einstellung der Arbeitsstellung und der Wendestellung des Spuranreißers geeignet ist, wurde erfindungsgemäß dahingehend weitergebildet, dass der Hydraulikzylinder mit seinem dem Spuranreißer gegenüberliegenden Ende über ein Gelenk mit einer schwenkbar an dem Rahmen befestigten Wippe verbunden ist, deren manuell lösbare Fixierung an dem Rahmen aus einem Sicherungsglied besteht.

Mit der Erfindung ist es gelungen, eine Sävorrichtung wesentlich zu vereinfachen, da hierbei nur noch ein einziger Hydraulikzylinder für einen Spurreißer zum Einsatz kommt, um die Arbeitsstellung und die Wendestellung des jeweiligen Spuranreißers einzustellen. Die Fixierung des Spuranreißers in der Transportstellung erfolgt erfindungsgemäß manuell mit Hilfe des Sicherungsgliedes. Diese Maßnahme hat eine zusätzliche Sicherheitsfunktion, weil der Anwender der Sävorrichtung die korrekte Einstellung der Transportstellung des Spuranreißers direkt kontrollieren kann. Zudem ist damit eine baulich einfache Ausführung geschaffen worden, die sich sehr kostengünstig umsetzen lässt und aufwendige Hebelmechaniken vermeidet. Der Spurreißer wird nach innen innerhalb der gesetzlich vorgeschriebenen Transportbreite verschwenkt.

Eine erste Ausgestaltung der Erfindung geht dahin, dass der Spuranreißer bei gelöstem Sicherungsglied manuell zwischen der Wendestellung und der Transportstellung verschwenkbar ist. Diese Maßnahme reduziert die Anzahl der für die Verschwenkung des Spuranreißers erforderlichen Bauteile auf ein Minimum und führt damit zu einer wesentlichen Vereinfachung der gesamten Sävorrichtung. Zur Erleichterung der Schwenkbewegung des Spuranreißers aus der Transportstellung in die Wendestellung oder in die Arbeitsstellung wird erfindungsgemäß vorgeschlagen, dass die Wippe entgegen der Kraft einer Feder um ein Scharniergelenk schwenkbar an dem Rahmen befestigt ist. Die Feder wirkt dabei bevorzugt als Zugfeder in Richtung der Schwenkbewegung von der Transportstellung in die Wendestellung oder in die Arbeitsstellung des Spuranreißers und übt folglich mittelbar auf den Spuranreißer beziehungsweise unmittelbar auf die Wippe eine Zugkraft aus. Somit wird eine sogenannte Totpunktverstellung verwirklicht. Unter dem erwähnten Scharniergelenk wird ganz allgemein ein Gelenk mit nur einem Freiheitsgrad verstanden. Folgerichtig kann erfindungsgemäß auch ein anderes Gelenk zum Einsatz kommen, dessen Bewegbarkeit in Analogie zum Scharniergelenk gegeben ist.

Je nach baulichen Anforderungen oder Gegebenheiten kann es ferner von Vorteil sein, die Wippe nicht unmittelbar am Rahmen zu befestigen, sondern diese mittelbar über einen Rahmenflansch mit dem Rahmen zu verbinden. Auf diese Weise kann die kinematische beziehungsweise geometrische Auslegung der relativ zueinander bewegbaren Bauelemente optimiert werden.

Eine besonders einfache Ausführungsvariante der Fixierung der Wippe am Rahmen beziehungsweise am Rahmenflansch ist ferner darin zu sehen, dass in dem Rahmen oder in dem Rahmenflansch Ausnehmungen oder Durchgangslöcher und korrespondierend hierzu in der Wippe Durchgangslöcher zum Einführen des Sicherungsgliedes vorhanden sind. Dabei entspricht jeder Stellung des Spuranreißers jeweils nur eine Ausnehmung beziehungsweise ein Durchgangsloch des Rahmens beziehungsweise des Rahmenflansches und ein hierzu korrespondierendes Durchgangsloch der Wippe, die nur dann miteinander fluchten, wenn die korrekte Position des Spuranreißers eingestellt ist. Nur in diesem Fall kann das Sicherungsglied durch die Durchgangslöcher der Wippe in die jeweils korrespondierende Ausnehmung beziehungsweise in das korrespondierende Durchgangsloch des Rahmens beziehungsweise des Rahmenflansches eingeführt werden und fixiert auf diese Weise die Wippe an dem Rahmen beziehungsweise an dem Rahmenflansch.

Als Sicherungsglied kann gemäß einer Weiterbildung der Erfindung ein Sicherungsbolzen, ein Sicherungssplint oder ein Sicherungsstift Verwendung finden. Die Auswahl des geeigneten Sicherungsgliedes richtet sich dabei wesentlich nach dessen Handhabung.

Eine die Sicherheit der Sävorrichtung erhöhende Maßnahme besteht darüber hinaus darin, dass das Sicherungsglied eine Verliersicherung aufweist. Mit anderen Worten ist das Sicherungsglied derart gesichert, dass es sich nicht selbsttätig lösen kann. Eine besonders einfache Ausführungsvariante besteht in einem Splint, der durch eine das Ende des Sicherungsbolzens durchdringende Bohrung hindurchgeführt wird und dessen Enden anschließend umgebogen werden. Selbstverständlich kann als Sicherungsglied auch ein einfacher Schraubenbolzen dienen, der auf der dem Schraubenkopf gegenüberliegenden Seite mit einer selbstsichernden Mutter oder gegebenenfalls mit einer Mutter und einer Kontermutter gesichert ist.

Zur Verbesserung der geometrischen Verhältnisse und der Anlenkung des Spuranreißers über den Hydraulikzylinder ist es ferner als vorteilhaft anzusehen, wenn der Hydraulikzylinder über einen zusätzlichen Befestigungsflansch mit dem Spuranreißer verbunden ist.

Wie eingangs bereits ausgeführt wurde, ist es insbesondere in der Transportstellung des Spuranreißers einer erfindungsgemäßen Sävorrichtung von entscheidender Bedeutung, dass die obere Endhöhe des Spuranreißers und damit die Höhe der Sävorrichtung maximal 4 m betragen darf, um die Sävorrichtung im Straßenverkehr transportieren zu können und zu dürfen. Während der Wendefahrt auf dem Vorgewende darf das obere Ende des hoch geschwenkten Spurreißers vom Boden gemessen nicht über 4,0m hinaus ragen. Dies fordert die Maschinenrichtlinie und soll die Kollision mit Stromleitungen verhindern. Allein bei Rüstarbeiten, wie Aus- und Einklappen der Maschine, darf kurzzeitig die 4,0m Grenze nach oben überschritten werden. Zur Umsetzung dieser Maßnahme ist es vorteilhaft, den Spuranreißer mehrfach einzuklappen oder diesen gemäß einem weiterführenden Vorschlag der Erfindung zumindest abschnittsweise teleskopierbar auszuführen. Hierfür weist ein derartiger Spuranreißer ein eine Spuranreißerscheibe tragendes Endstück auf, das axial verschiebbar in einem Teleskoprohr aufgenommen ist.

Bevorzugt wird der Spuranreißer stufenweise oder stufenlos teleskopierbar ausgeführt. Die stufenlose Teleskopierbarkeit lässt sich beispielsweise über geeignete Klemmschellen am Außenumfang des in diesem Fall begrenzt geschlitzten Teleskoprohres realisieren. Eine stufenweise Verstellung in axialer Richtung des Teleskoprohres kann in einer in Längsrichtung des Spuranreißers aufeinanderfolgenden Reihe einzelner Bohrungen bestehen, denen korrespondierende Bohrungen des Endstückes zugeordnet sind, so dass mit Hilfe eines Sicherungsstiftes oder eines Schraubbolzens die Länge des Spuranreißers verändert und eingestellt werden kann.

Üblicherweise verfügen Sävorrichtungen bezogen auf ihre Fahrtrichtung über mindestens einen Spuranreißer. Eine bevorzugte Ausführungsvariante besteht jedoch darin, dass die erfindungsgemäße Sävorrichtung beidseitig je einen Spuranreißer aufweist.

Weitere Einzelheiten der Erfindung sind der Beispielsbeschreibung und den Zeichnungen zu entnehmen.
Die Zeichnungen zeigen:
- Fig.1: eine Teilansicht einer Sävorrichtung mit einem Spuranreißer in einer Transportstellung,
- Fig.2: die Teilansicht einer Sävorrichtung aus Fig.1 mit der Darstellung des der Figur 3 entsprechenden Detailausschnittes,
- Fig.3: der Detailausschnitt III aus Fig.2,
- Fig.4: eine Teilansicht einer Sävorrichtung mit einem Spuranreißer in einer Wendestellung,
- Fig.5: die vergrößerte Detailansicht V aus Fig.4,
- Fig.6: eine Teilansicht einer Sävorrichtung mit einem Spuranreißer in einer Arbeitsstellung und
- Fig.7: die vergrößerte Detailansicht VII aus Fig.6.

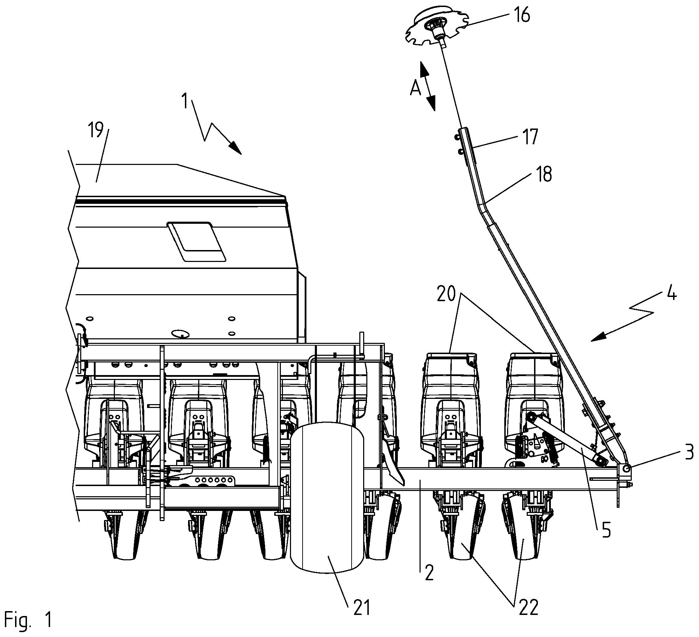

Aus der Fig.1 geht eine Teilansicht einer Sävorrichtung 1 mit einem Spuranreißer 4 in einer Transportstellung hervor. Die Sävorrichtung 1 umfasst in an sich bekannter Weise einen Vorratsbehälter 19, dessen Größe und Volumen ausreichend sind, mehrere an einem Rahmen 2 angeordnete Verteilerbehälter 20 mit Saatgut zu versorgen. Der Rahmen 2 ist vorzugsweise insgesamt als ein Fahrgestell ausgebildet und weist daher Räder 21 auf, so dass die Sävorrichtung 1 im vorliegenden Fall als ein Anhänger einer in der Figur 1 nicht gezeigten Zugmaschine nutzbar ist. Als Zugmaschine kann dabei ein landwirtschaftliches Fahrzeug, also beispielsweise ein Traktor zum Einsatz kommen. Die Zugmaschine verfügt ferner über Hydraulikaggregate, die für die Ansteuerung der Sävorrichtung 1 nutzbar sind. Ebenfalls bekannt ist bei einer Sävorrichtung 1, wie sie aus der Fig.1 hervorgeht, die Anordnung einer Reihe von Säscharen 22, mittels derer Saatreihen in den mit Saatgut zu versehenden Erdboden eingebracht werden. In die auf diese Weise erzeugten Saatreihen wird das Saatgut aus den Verteilerbehältern 20 eingebracht, die den bereits erwähnten Spurscharen 22 in Fahrtrichtung der Sävorrichtung 1 betrachtet, nachgeordnet sind. Beidseitig der Sävorrichtung 1 weist diese zudem jeweils einen zur Markierung einer Spur geeigneten Spuranreißer 4 auf, der, wie dies anschaulich aus der Fig.1 hervorgeht, eine beachtliche Länge aufweist. Da die gesamte Sävorrichtung 1 auch im Straßenverkehr bewegt werden muss, um beispielsweise einen Wechsel zwischen zwei nacheinander zu bearbeitenden Feldern vorzunehmen, ist es aus Sicherheitsgründen erforderlich und auch vorgeschrieben, den Spuranreißer 4 in eine so genannte Transportstellung zu verbringen, wie sie aus der Fig.1 hervorgeht. Dabei wird der gesamte, an dem Rahmen 2 befestigte Spuranreißer 4 um ein Drehgelenk 3 nach innen, also in Richtung Mitte der Sävorrichtung 1, innerhalb der zulässigen Transportbreite verschwenkt und in dieser Position fixiert. Wie aus der Fig.1 ferner hervorgeht, weist der Spuranreißer 4 an seinem axial äußeren Ende eine Spuranreißerscheibe 16 auf, durch die die Markierung der Spur in dem Untergrund erfolgt. Die Spuranreißerscheibe 16 ist an einem Endstück 17 des Spuranreißers 4 drehbar gelagert, wobei das Endstück 17 zur Reduzierung der Höhe des in die Transportstellung eingeklappten Spuranreißers 4 axial in Richtung des Doppelpfeils A verschiebbar in einem Teleskoprohr 18 aufgenommen ist. Aus der Darstellung in Figur 1 geht lediglich andeutungsweise eine Möglichkeit der Fixierung des Endstückes 17 in dem Teleskoprohr 18 hervor, die vorliegend aus zwei Schrauben am Ende des Teleskoprohres 18 besteht.

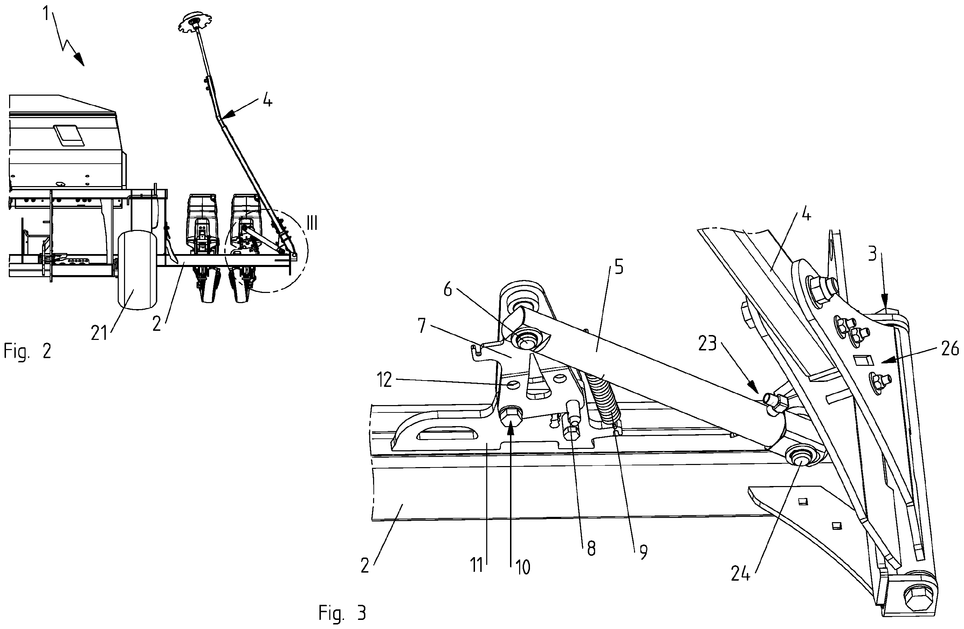

Die Fig.2 zeigt nochmals in verkleinerter Darstellung die Fig.1, wobei in dieser Ansicht der in Figur 3 gezeigte, vergrößerte Ausschnitt veranschaulicht ist.

Der Detailausschnitt III aus Fig.2 geht aus der Fig.3 hervor und zeigt den Bereich der Verbindung zwischen dem Spuranreißer 4 und dem Rahmen 2 der Sävorrichtung 1 in der in den Figuren 1 und 2 gezeigten Transportstellung des Spuranreißers 4. Wie bereits ausgeführt wurde, lässt sich der Spuranreißer 4 um ein mit einem Freiheitsgrad ausgestattetes, in diesem Fall als Drehgelenk 3 ausgeführtes Gelenk in Relation zum Rahmen 2 und in einem definierten Winkelbereich verschwenken. Der Spuranreißer 4 ist hierzu in einem Spuranreißerflansch 26 aufgenommen, der einen Teil des Drehgelenkes 3 bildet. Die Verschwenkungsmöglichkeit des Spuranreißers 4 um das Drehgelenk 3 gestattet es folglich, diesen zwischen der Transportstellung, einer Arbeitsstellung und einer Wendestellung hin- und her zu bewegen. Während der Bearbeitung des Feldes wird der Spuranreißer lediglich zwischen der Arbeitsstellung und der Wendestellung verschwenkt. Dabei bedeutet die Arbeitsstellung, dass der Spuranreißer 4 vollständig ausgeklappt beziehungsweise abgesenkt ist, so dass dabei die Spuranreißerscheibe 16 eine Spur in den Untergrund zieht. Die Wendestellung bedeutet eine teilweise eingeklappte, angehobene Position des Spuranreißers 4, so dass die Sävorrichtung 1 in ihrer Fahrtrichtung verändert werden kann, ohne dass die Spuranreißerscheibe 16 dabei auf den Untergrund einwirkt. Hierbei ist es von Bedeutung, dass ein über die Hydraulik des Schleppfahrzeuges ansteuerbarer Hydraulikzylinder 5 für den Wechsel zwischen der Arbeitsstellung und der Wendestellung des Spuranreißers 4 genutzt wird, sodass der Wechsel zwischen Arbeitsstellung und Wendestellung automatisiert und ohne Unterbrechung der Feldbearbeitung erfolgen kann. Der Hydraulikzylinder 5 weist hierfür einen Hydraulikleitungsanschluss 23 auf, über den in an sich bekannter Weise Hydraulikflüssigkeit in den Hydraulikzylinder 5 eingebracht oder aus dem Hydraulikzylinder 5 abgeführt wird. Dies hat zur Folge, dass der Kolben und damit die Kolbenstange 25 des Hydraulikzylinders 5 je nach Beaufschlagung mit Hydraulikflüssigkeit ein- beziehungsweise ausgefahren wird und dadurch die Stellung des Spuranreißers 4 verändert werden kann. In der in Figur 3 dargestellten Transportstellung des Spuranreißers 4 ist der Kolben beziehungsweise die Kolbenstange des Hydraulikzylinders 5 vollständig eingefahren. Der Hydraulikzylinder 5 ist darüber hinaus mit einem Ende über ein Gelenk 24 mit dem Spuranreißer 4 gekoppelt, während das dem Spuranreißer 4 gegenüberliegende Ende des Hydraulikzylinders 5 über ein weiteres Gelenk 6 mit einer Wippe 7 verbunden ist. Sowohl das Gelenk 6, als auch das Gelenk 24 kann lediglich einen Freiheitsgrad aufweisen. Es ist jedoch ebenso möglich, die Gelenke 6 und 24 beispielsweise als Kugelgelenke, also als Gelenke mit mehreren Freiheitsgraden auszuführen. Die Wippe 7 weist in ihrem unteren Abschnitt zwei Durchgangslöcher 12 und 13 sowie ein ebenfalls mit einem Freiheitsgrad ausgestattetes und in diesem Fall als Scharniergelenk 10 ausgeführtes Gelenk auf, um das die Wippe 7 verschwenkbar an einem Rahmenflansch 11 des Rahmens 2 gelagert ist. Ein je nach Stellung des Spuranreißers 4 in eine der Durchgangslöcher 12 beziehungsweise 13 einführbares Sicherungsglied 8 ist vorliegend als Sicherungsbolzen ausgeführt und hier in das Durchgangsloch 13 eingesetzt, das fluchtend mit einer korrespondierenden Ausnehmung beziehungsweise einem korrespondierenden Durchgangsloch in dem Rahmenflansch 11 angeordnet ist. Das Sicherungsglied 8 durchsetzt das Durchgangsloch 13 vollständig und greift dabei in die korrespondierende Ausnehmung beziehungsweise in das korrespondierende Durchgangsloch des Rahmenflansches 11 ein, so dass der Spuranreißer 4 auf diese Weise in der Transportstellung fixiert ist. Zur Erleichterung der Rückstellbewegung des Spuranreißers 4 aus der Transportstellung in die Arbeitsstellung oder in die Wendestellung ist darüber hinaus zwischen dem Rahmenflansch 11 und der Wippe 7 eine im vorliegenden Fall als Zugfeder ausgeführte Feder 9 vorhanden. Hier wird eine sogenannte Totpunktschaltung verwendet.

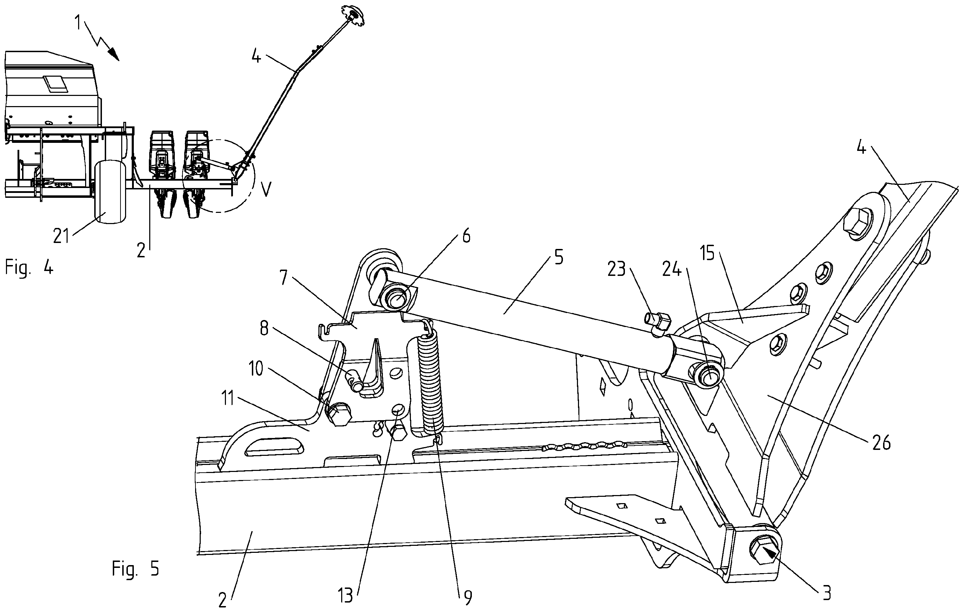

Die Fig.4 veranschaulicht eine Teilansicht der Sävorrichtung 1 mit einem Spuranreißer 4 in einer Wendestellung. Dabei wird ersichtlich, dass der Spuranreißer 4 um einen definierten Winkel aus der Transportstellung in die Wendestellung verschwenkt wurde. Der zwischen dem Teleskoprohr 18 und dem Rahmen 2 eingeschlossene Winkel beträgt dabei etwa 120°. Aus der Fig.4 geht darüber hinaus der mit V gekennzeichnete Bereich hervor, der nachfolgend im Zusammenhang mit der Darstellung in Figur 5 näher erläutert wird.

So geht aus der Fig.5 die Detailansicht V aus Fig.4 hervor. An dem den Spuranreißer 4 aufnehmenden Spuranreißerflansch 26 ist ein für die Anbringung des Hydraulikzylinders 5 angepasster Befestigungsflansch 15 ausgebildet, der vorliegend einen Teil des Gelenkes 24 bildet, um das der Hydraulikzylinder 5 bewegbar ist. Auf der dem Spuranreißer 4 gegenüberliegenden Seite des Hydraulikzylinders 5 verfügt dieser, wie bereits ausgeführt wurde, über ein weiteres Gelenk 6, das die Verbindung zu der Wippe 7 bildet. Wie ferner im Zusammenhang mit der Beschreibung der Fig.3 bereits ausgeführt wurde, ist die Wippe 7 um das Scharniergelenk 10 schwenkbar an dem Rahmenflansch 11 des Rahmens 2 gelagert. In der in Fig.5 gezeigten Wendestellung des Spuranreißers 4 ist die Wippe 7 in einer nicht ausgelenkten Position an dem Rahmenflansch 11 fixiert. Hierzu dient wiederum das Sicherungsglied 8, das in diesem Fall in das Durchgangsloch 12 der Wippe 7 eingesetzt ist, dieses durchdringt und auf der der Wippe 7 gegenüberliegenden Seite in eine Ausnehmung oder in ein Durchgangsloch des Rahmenflansches 11 eingreift. Deutlich erkennbar ist in der Darstellung der Figur 5 auch das Durchgangsloch 13 der Wippe 7 zur Aufnahme des Sicherungsgliedes 8 in der zuvor beschriebenen Transportstellung des Spuranreißers 4. Die Feder 9 ist bei der dargestellten Wendestellung des Spuranreißers 4 entspannt.

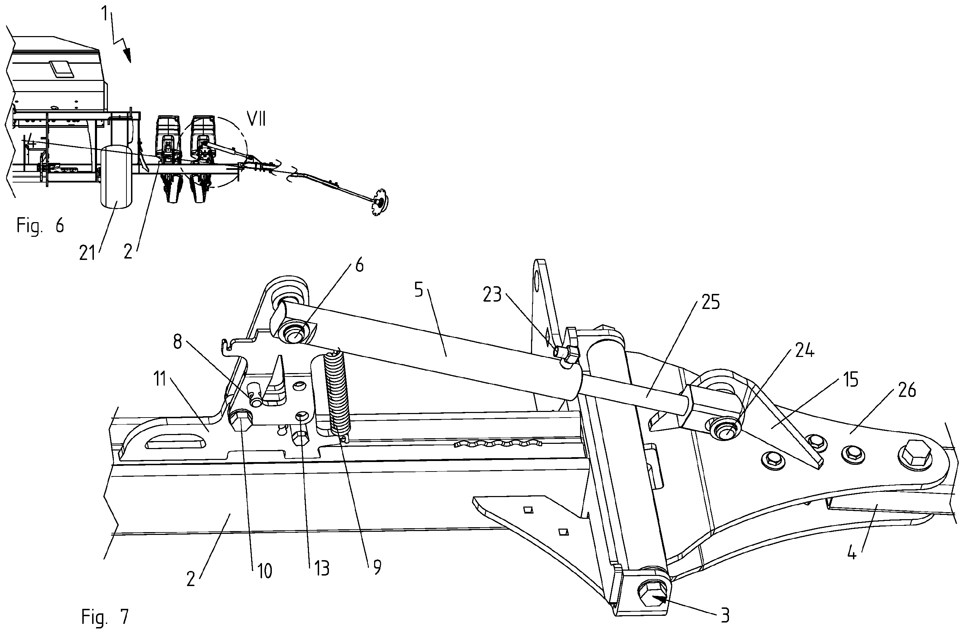

Die Fig.6 zeigt eine Teilansicht der Sävorrichtung 1 mit dem Spuranreißer 4 in der Arbeitsstellung. Darüber hinaus ist der Fig.6 der Ausschnitt VII entnehmbar, auf den nachfolgend im Zusammenhang mit der Beschreibung der Figur 7 näher eingegangen wird.

Die Fig.7 lässt die Arbeitsstellung des Spuranreißers 4 erkennen. Im Unterschied zu der Wendestellung, wie sie im Zusammenhang mit der Figur 5 erläutert wurde, ist der Hydraulikzylinder 5 hierbei vollständig ausgefahrenen, so dass die Kolbenstange 25 aus dem Hydraulikzylinder 5 ausgetreten ist. Auch in dieser Position des Spuranreißers 4 besteht eine die Wippe 7 fixierende Verbindung zwischen der Wippe 7 und dem Rahmenflansch 11 über das in die Durchgangsbohrung 12 der Wippe eingesetzte Sicherungsglied 8, das auf der der Wippe 7 gegenüberliegenden Seite in eine zu der Durchgangsbohrung 12 korrespondierende Ausnehmung oder Durchgangsbohrung des Rahmenflansches 11 eingesetzt ist. Die Besonderheit der Erfindung besteht darin, dass mit lediglich einem einzigen Hydraulikzylinder 5 zwischen der Arbeitsstellung und der Wendestellung des Spuranreißers 4 gewechselt werden kann, während die Überführung des Spuranreißers 4 aus der Wendestellung in die Transportstellung rein manuell erfolgt, indem das Sicherungsglied 8 aus dem Durchgangsloch 12 entfernt und nach Herbeiführung der Transportstellung des Spuranreißers 4 manuell in das Durchgangsloch 13 eingeführt wird, so dass das Sicherungsglied 8 das Durchgangsloch 13 vollständig durchsetzt und in eine nur in der Transportstellung mit dem Durchgangsloch 13 korrespondierende Ausnehmung beziehungsweise in ein korrespondierendes Durchgangsloch des Rahmenflansches 11 eingreift.

### Bezugszeichenliste:

- 1: Sävorrichtung
- 2: Rahmen
- 3: Drehgelenk
- 4: Spuranreißer
- 5: Hydraulikzylinder
- 6: Gelenk
- 7: Wippe
- 8: Sicherungsglied
- 9: Feder
- 10: Scharniergelenk
- 11: Rahmenflansch
- 12: Durchgangsloch
- 13: Durchgangsloch
- 14: Verliersicherung
- 15: Befestigungsflansch
- 16: Spuranreißerscheibe
- 17: Endstück
- 18: Teleskoprohr
- 19: Vorratsbehälter
- 20: Verteilerbehälter
- 21: Räder
- 22: Spurscharen
- 23: Hydraulikleitungsanschluss
- 24: Gelenk
- 25: Kolbenstange
- 26: Spuranreißerflansch

## Patentansprüche

1. Sävorrichtung (1) mit einem vorzugsweise als Fahrgestell ausgebildeten Rahmen (2), der einen um ein Drehgelenk (3) zwischen einer Arbeitsstellung, einer Wendestellung und einer Transportstellung schwenkbaren Spuranreißer (4) aufweist, wobei ein einziger, gelenkig mit dem Spuranreißer (4) gekoppelter Hydraulikzylinder (5) mittels einer vorhandenen Hydraulik zur Anwahl und Einstellung der Arbeitsstellung und der Wendestellung des Spuranreißers (4) geeignet ist,
wobei
der Hydraulikzylinder (5) mit seinem dem Spuranreißer (4) gegenüberliegenden Ende über ein Gelenk (6) mit einer schwenkbar an dem Rahmen (2) befestigten Wippe (7) verbunden ist, deren manuell lösbare Fixierung an dem Rahmen (2) aus einem Sicherungsglied (8) besteht
**dadurch gekennzeichnet, dass**
die Wippe (7) entgegen der Kraft einer Feder (9) um ein Scharniergelenk (10) schwenkbar an dem Rahmen (2) befestigt ist.

2. Sävorrichtung nach Anspruch 1,
**dadurch gekennzeichnet, dass**
der Spuranreißer (4) bei gelöstem Sicherungsglied (8) manuell zwischen der Wendestellung und der Transportstellung verschwenkbar ist.

3. Sävorrichtung nach einem der vorstehend genannten Ansprüche,
**dadurch gekennzeichnet, dass**
die Wippe (7) über einen an dem Rahmen (2) vorhandenen Rahmenflansch (11) mit dem Rahmen (2) verbunden ist.

4. Sävorrichtung nach einem der vorstehend genannten Ansprüche,
**dadurch gekennzeichnet, dass**
in dem Rahmen (2) oder in dem Rahmenflansch (11) Ausnehmungen oder Durchgangslöcher und korrespondierend hierzu in der Wippe (7) Durchgangslöcher (12, 13) zum Einführen des Sicherungsgliedes (8) vorhanden sind, wobei je einer Stellung des Spuranreißers (4) entsprechend, jeweils nur eine Ausnehmung beziehungsweise ein Durchgangsloch des Rahmens (2) beziehungsweise des Rahmenflansches (11) mit einem korrespondierenden Durchgangsloch (12 oder 13) der Wippe (7) fluchtet.

5. Sävorrichtung nach einem der vorstehend genannten Ansprüche,
**dadurch gekennzeichnet, dass**
das Sicherungsglied (8) ein Sicherungsbolzen, ein Sicherungssplint oder ein Sicherungsstift ist.

6. Sävorrichtung nach einem der vorstehend genannten Ansprüche,
**dadurch gekennzeichnet, dass**
das Sicherungsglied (8) eine Verliersicherung (14) aufweist.

7. Sävorrichtung nach einem der vorstehend genannten Ansprüche,
**dadurch gekennzeichnet, dass**
der Hydraulikzylinder (5) über einen Befestigungsflansch (15) mit dem Spuranreißer (4) verbunden ist.

8. Sävorrichtung nach einem der vorstehend genannten Ansprüche,
**dadurch gekennzeichnet, dass**
der Spuranreißer (4) zumindest abschnittsweise teleskopierbar ausgeführt ist und hierfür ein eine Spuranreißerscheibe (16) tragendes Endstück (17) aufweist, das axial verschiebbar in einem Teleskoprohr (18) aufgenommen ist.

9. Sävorrichtung nach Anspruch 8,
**dadurch gekennzeichnet, dass**
der Spuranreißer (4) stufenweise oder stufenlos teleskopierbar ist.

10. Sävorrichtung nach einem der vorstehend genannten Ansprüche, **dadurch gekennzeichnet, dass**
die Sävorrichtung (1) bezogen auf ihre Fahrtrichtung beidseitig je einen Spuranreißer (4) aufweist.

## Claims

1. Sowing apparatus (1) having a frame (2) which is preferably configured as a chassis and has a track marker (4) which can be pivoted about a swivel joint (3) between a working position, a turning position and a transport position, a single hydraulic cylinder (5) which is coupled in an articulated manner to the track marker (4) being suitable by means of a present hydraulic system for selecting and setting the working position and the turning position of the track marker (4), the hydraulic cylinder (5) being connected with its end which lies opposite the track marker (4) via a joint (6) to a rocker (7) which is fastened pivotably to the frame (2) and the manually releasable fixing of which on the frame (2) consists of a securing member (8), **characterized in that** the rocker (7) is fastened to the frame (2) such that it can be pivoted about a hinged joint (10) counter to the force of a spring (9).

2. Sowing apparatus according to Claim 1, **characterized in that**, in the case of a released securing member (8), the track marker (4) can be pivoted manually between the turning position and the transport position.

3. Sowing apparatus according to either of the abovementioned claims, **characterized in that** the rocker (7) is connected to the frame (2) via a frame flange (11) which is present on the frame (2).

4. Sowing apparatus according to one of the abovementioned claims, **characterized in that** there are recesses or through holes in the frame (2) or in the frame flange (11), and, in a corresponding manner to this, there are through holes (12, 13) in the rocker (7) for the introduction of the securing member (8), in each case only one recess or one through hole of the frame (2) or the frame flange (11) being aligned with a corresponding through hole (12 or 13) of the rocker (7) according to in each case one position of the track marker (4).

5. Sowing apparatus according to one of the abovementioned claims, **characterized in that** the securing member (8) is a securing bolt, a securing splint or a securing pin.

6. Sowing apparatus according to one of the abovementioned claims, **characterized in that** the securing member (8) has a captive securing means (14).

7. Sowing apparatus according to one of the abovementioned claims, **characterized in that** the hydraulic cylinder (5) is connected to the track marker (4) via a fastening flange (15).

8. Sowing apparatus according to one of the abovementioned claims, **characterized in that** the track marker (4) is of telescopic configuration at least in sections and, for this purpose, has an end piece (17) which supports a track marker disc (16) and is received in a telescopic tube (18) in an axially displaceable manner.

9. Sowing apparatus according to Claim 8, **characterized in that** the track marker (4) can be telescoped in a stepped or infinitely variable manner.

10. Sowing apparatus according to one of the abovementioned claims, **characterized in that** the sowing apparatus (1) has in each case one track marker (4) on both sides in relation to its direction of movement.

## Revendications

1. Semoir (1) avec un châssis (2) configuré de préférence en forme de chariot, qui présente un traceur (4) pouvant pivoter autour d'une articulation (3) entre une position de travail, une position inversée et une position de transport, dans lequel un seul vérin hydraulique (5) couplé de façon articulée au traceur (4) au moyen d'une hydraulique existante convient pour la sélection et le réglage de la position de travail et de la position inversée du traceur (4),
dans lequel le vérin hydraulique (5) est relié par son extrémité opposée au traceur (4) au moyen d'une articulation (6) à une bascule (7) fixée de façon pivotante au châssis (2), dont la fixation libérable à la main au châssis (2) se compose d'un organe de blocage (8),
**caractérisé en ce que** la bascule (7) est fixée au châssis (2) de façon pivotante autour d'une articulation à charnière (10) contre la force d'un ressort (9).

2. Semoir selon la revendication 1, **caractérisé en ce que** le traceur (4) peut pivoter manuellement entre la position inversée et la position de transport lorsque l'organe de blocage (8) est libéré.

3. Semoir selon l'une quelconque des revendications précédentes, **caractérisé en ce que** la bascule (7) est assemblée au châssis (2) au moyen d'une bride de châssis (11) présente sur le châssis (2).

4. Semoir selon l'une quelconque des revendications précédentes, **caractérisé en ce qu'**il se trouve dans le châssis (2) ou dans la bride de châssis (11) des évidements ou des trous de passage et des trous de passage (12, 13) correspondant à ceux-ci dans la bascule (7) pour l'introduction de l'organe de blocage (8), dans lequel selon à chaque fois une position du traceur (4) seul un évidement ou un trou de passage du châssis (2) ou de la bride de châssis (11) est en alignement avec un trou de passage correspondant (12 ou 13) de la bascule (7).

5. Semoir selon l'une quelconque des revendications précédentes, **caractérisé en ce que** l'organe de blocage (8) est un axe de blocage, une cannelure de blocage ou une goupille de blocage.

6. Semoir selon l'une quelconque des revendications précédentes, **caractérisé en ce que** l'organe de blocage (8) présente une sécurité contre la perte (14).

7. Semoir selon l'une quelconque des revendications précédentes, **caractérisé en ce que** le vérin hydraulique (5) est assemblé au traceur (4) au moyen d'une bride de fixation (15).

8. Semoir selon l'une quelconque des revendications précédentes, **caractérisé en ce que** le traceur (4) est au moins en partie télescopique et présente à cet effet une pièce d'extrémité (17) portant un disque de traceur (16), qui est logée de façon déplaçable axialement dans un tube télescopique (18).

9. Semoir selon la revendication 8, **caractérisé en ce que** le traceur (4) est télescopique par étapes ou en continu.

10. Semoir selon l'une quelconque des revendications précédentes, **caractérisé en ce que** le semoir (1) présente respectivement un traceur (4) de part et d'autre par rapport à la direction de déplacement.
